(19) Europäisches Patentamt
European Patent Office
Office européen des brevets

(11) **EP 2 254 380 A1**

(12) **EUROPEAN PATENT APPLICATION**

(43) Date of publication:
**24.11.2010 Bulletin 2010/47**

(51) Int Cl.:
***H04W 72/04*** (2009.01)

(21) Application number: **09160546.9**

(22) Date of filing: **18.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Nokia Siemens Networks OY**
**02610 Espoo (FI)**

(72) Inventors:
• **Wagner, Gustavo**
**DK 9000 Aalborg (DK)**

• **Kovacs, Istvan Zsolt**
**DK 9000 Aalborg (DK)**
• **Cattoni, Andrea**
**DK 9000 Aalborg (DK)**

(74) Representative: **Bruglachner, Thomas E. et al**
**Nokia Siemens Networks GmbH & Co. KG**
**CEF CTO IPR / Patent Administration**
**80240 Munich (DE)**

(54) **A method and apparatus**

(57)    A method comprising performing a first function which is dependent on an estimated resource capacity and a penalty which is dependent on at least one of a number of physical resource units selected and interference; and selecting one or more physical resource units in dependence on said first function.

EP 2 254 380 A1

**Description**

Field of the Invention

The present invention relates to a method and apparatus and in particular but not exclusively to a method and apparatus for use in the selection of physical resource units.

Background

A communication device can be understood as a device provided with appropriate communication and control capabilities for enabling use thereof for communication with other parties. The communication may comprise, for example, communication of voice, electronic mail (email), text messages, data, multimedia and so on. A communication device typically enables a user of the device to receive and transmit communication via a communication system and can thus be used for accessing various applications.

A communication system is a facility which facilitates the communication between two or more entities such as the communication devices, network entities and other nodes. A communication system may be provided by one or more interconnect networks. One or more gateway nodes may be provided for interconnecting various networks of the system. For example, a gateway node is typically provided between an access network and other communication networks, for example a core network and/or a data network.

An appropriate access system allows the communication device to access to the wider communication system. An access to the wider communications system may be provided by means of a fixed line or a wireless communication interface, or a combination of these. Communication systems providing wireless access typically enable at least some mobility for the users thereof. Examples of these include wireless communications systems where the access is provided by means of an arrangement of cellular access networks. Other examples of wireless access technologies include different wireless local area networks (WLANs) and satellite based communication systems.

A wireless access system typically operates in accordance with a wireless standard and/or with a set of specifications which set out what the various elements of the system are permitted to do and how that should be achieved. For example, the standard or specification may define if the user, or more precisely user equipment, is provided with a circuit switched bearer or a packet switched bearer, or both. Communication protocols and/or parameters which should be used for the connection are also typically defined. For example, the manner in which communication should be implemented between the user equipment and the elements of the network and their functions and responsibilities are typically defined by a predefined communication protocol.

The increasing number of wireless communication users has forced operators and infrastructure equipment vendors to design and install access network equipment with an increasing spatial density and a consequent reduction of the range of each network equipment often to tens of meters.

Local area wireless access is hence becoming more desirable, in order to allow users to access the same internet services he/she is used to having on a wired network.

Physical resources (spectrum, time) are factors, whose efficiency has to be selected on the basis of a trade-off between operator(s) and user's costs and final user satisfaction. Physical resource availability and/or use constraints have been addressed by the design of wireless systems able to share the same overall physical resource set. Maximization of the efficiency of this set is needed since transported internet services are pushing QoS (Quality of Service) requirements to the limits of the actual technology.

In a shared radio resources scenario, where several Access Point (AP) nodes/operators share the same physical resources (for example time or frequency), resource pattern assignment and interference management/reduction is one of the major problems for coexistence of multiple access points. The amount of information exchanged between the nodes can be limited or absent due for example to inter-operators sharing policies.

Current WLAN systems may provide some degree of time domain interference management (contention-based), but one drawback is on the lack of scalability.

In Beibei Wang; Yongle Wu; Zhu Ji; Liu, K.J.; Clancy, T., "Game theoretical mechanism design methods," Signal Processing Magazine, IEEE , vol.25, no.6, pp.74-84, November 2008 an arrangement for power control based on taxation is described.

Leshem, A.; Zehavi, E., "Cooperative Game Theory and the Gaussian Interference Channel," Selected Areas in Communications, IEEE Journal on , vol.26, no.7, pp.1078-1088, September 2008 describes a cooperative scenario where there is no overlapping of frequencies and, therefore, the arrangement does not scale to proper frequency reuse. Furthermore, the signalling requirements and algorithm complexity are large.

In Nie ; C. Comaniciu, "Adaptive Channel Allocation Spectrum Etiquette for Cognitive Radio Networks", IEEE Symposium on New Frontiers in Dynamic Spectrum Access Networks (DySPAN) 2005, Nov. 2005 different distributed approaches are considered but the application of the procedures is limited to the choice of a single channel.

In general, the known arrangements generally have at least one of the following drawbacks: spectral inefficiency, signaling overhead, bad scalability and high complexity in the resource allocation.

SUMMARY OF THE INVENTION

According to a first aspect, there is provided a method comprising performing a first function which is dependent on an estimated resource capacity and a penalty which is dependent on at least one of a number of physical resource units selected and interference; and selecting one or more physical resource units in dependence on said first function.

The first function may comprise a utility function,

The estimated resource capacity may comprise a channel capacity.

The estimated resource capacity may comprise a function of a signal to interference dependent parameter ratio.

The penalty may comprise a factor which depends on an interference dependent parameter.

The interference dependent parameter may comprise one of interference-plus-noise and interference.

The interference dependent parameter may be per physical resource unit.

The method may comprise obtaining said dependent parameter.

The penalty may comprise a factor which increases as a number of physical resource units which are selected increases.

The method may comprise selecting one or more physical resource units from one or more physical resource units based on for which said estimated resource capacity outweighs said penalty

The method may comprise sorting of physical resource units in dependence on interference.

According a second aspect of the invention, there is provided a computer program comprising program code means adapted to perform any of the steps of discussed above when the program is run.

According to a third aspect, there is provide apparatus comprising means for performing a first function which is dependent on an estimated resource capacity and a penalty which is dependent on at least one of a number of physical resource units selected and interference; and means for selecting one or more physical resource units in dependence on said first function.

The first function may comprise a utility function.

The estimated resource capacity may comprise a channel capacity.

The estimated resource capacity may comprise a function of a signal to interference dependent parameter ratio.

The penalty may comprise a factor which depends on an interference dependent parameter.

The interference dependent parameter may comprise one of interference-plus-noise and interference.

The interference dependent parameter may be per physical resource unit.

The apparatus may comprise means for obtaining said dependent parameter.

The penalty may comprise a factor which increases as a number of physical resource units which are selected increases.

The apparatus may comprise means for selecting one or more physical resource units from one or more physical resource units based on for which said estimated resource capacity outweighs said penalty

The apparatus may comprise means for sorting of physical resource units in dependence on interference.

BRIEF DESCRIPTION OF FIGURES

For a better understanding of the present invention and how the same may be carried into effect, reference will now be made by way of example only to the accompanying drawings in which:

Figure 1 shows a schematic representation of two wireless access systems a mobile device may use for accessing a data network;

Figure 2 shows a partially sectioned view of a mobile device;

Figure 3 illustrates a shared resource scenario where multiple access nodes/operators share the same resources;

Figure 4 shows a graph of interference spectral density versus frequency resource number;

Figure 5 shows a graph of capacity per physical resource unit (PRU) and transfer function per PRU against PRU;

Figure 6 shows a graph of overall utility with no taxation and the utility function with taxation against total number of selected PRUs;

Figure 7 shows a schematic diagram illustrating an embodiment of the present invention;

Figure 8 shows a cumulative distribution function of downlink signal to noise ratio;

Figure 9 shows a graph of user equipment outage throughput versus frame index;

Figure 10 shows a graph of mean cell throughput versus frame index;

Figure 11 schematically shows an access point embodying the present invention; and

Figure 12 shows a method embodying the present invention

DETAILED DESCRIPTION OF EMBODIMENTS

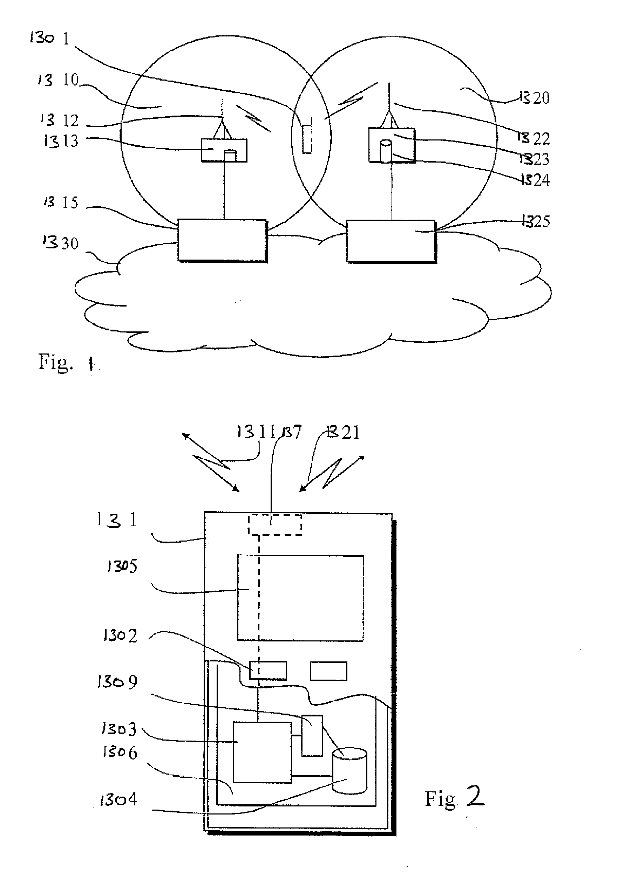

Reference is made to Figures 1 and 2. A communication device can be used for accessing various services and/or applications provided via a communications system. In wireless or mobile systems the access is provided via an access interface between a communication device 1301 and an appropriate wireless access system 1310 and 1320.

A communication device 1301 can typically access wirelessly a communication system via at least one base station 1312 and 1322 or similar wireless transmitter and/or receiver node. Non-limiting examples of appropriate access nodes or access points are a base station of a cellular system and a base station of a wireless local area network (WLAN). Each communication device may have one or more radio channels open at the same time and may be connected to more than one base station.

A base station is typically controlled by at least one appropriate controller entity 1313, 1323 so as to enable operation thereof and management of devices in communication with the base station. The controller entity is typically provided with memory capacity 1324 and at least one data processor.

A communication device may be used for accessing various applications. For example, a communication device may access applications provided in a data network 1330. For example, various applications may be offered in a data network that is based on the Internet Protocol (IP) or any other appropriate protocol.

In Figure 1 the base station nodes 1312 and 1322 are connected to the data network 1330 via appropriate gateways 1315 and 1325 respectively. A gateway function between a base station node and another network may be provided by means of any appropriate gateway node, for example a packet data gateway and/or an access gateway.

Figure 2 shows a schematic partially sectioned view of a communication device 1301 that can be used for accessing a communication system via a wireless interface. The communication device 1301 of Figure 2 can be used for various tasks such as making and receiving phone calls, for receiving and/or sending data from and to a data network and for experiencing, for example, multimedia or other content.

An appropriate device may be provided by any device capable of at least sending or receiving radio signals 1311 and 1321. Non-limiting examples include a mobile station (MS), a portable computer provided with a wireless interface card or other wireless interface facility, personal data assistant (PDA) provided with wireless communication capabilities, or any combinations of these or the like. The device may not be intended to be moved and for example could be a computer with a wireless facility in an office environment. Alternatively or additionally the device may be a remote sensing device which is arranged to periodically report sensed data. The sensing device may report environment conditions or may report conditions or information about equipment. The device 1301 may communicate via an appropriate radio interface arrangement of the device. In Figure 2 the radio interface arrangement is designated schematically by block 1307. The interface arrangement may be provided for example by means of a radio part and associated antenna arrangement. The antenna arrangement may be arranged internally or externally to the device.

A communication device is typically provided with at least one data processing entity 1303, 1309 and at least one memory 1304 for use in tasks it is designed to perform. The data processing and storage entities can be provided on an appropriate circuit board and/or in chipsets. This feature is denoted by reference 1306.

The user may control the operation of the device by means of a suitable user interface such as key pad 1302, voice commands, touch sensitive screen or pad, combinations thereof or the like. A display 1305, a speaker and a microphone may be provided. Furthermore, a communications device may comprise appropriate connectors (either wired or wireless) to other devices and/or for connecting to external accessories, for example hands-free equipment, thereto.

Embodiments of the invention may use game-theory. Some embodiments of the invention may allow the design of decentralized/distributed algorithms. Some embodiments of the invention aim to provide a reliable and efficient trade-off between planned and unplanned networks. Some embodiments of the invention may provide the dynamicity and flexibility of the contention/collision avoidance-based networks (e.g. WiFi, Bluetooth) and may achieve similar results in terms of throughput and guarantee of service requirements of the planned networks (e.g. GSM (global system for mobile communications), WCDMA (wideband code division multiple access), and LTE (long term evolution)). In some embodiments of the invention, the algorithm may provide an efficient use of the available radio resources.

One or more embodiments of the invention may provide an autonomous and distributed algorithm and/or method and/or apparatus for physical radio resource allocation in local area wireless access systems or the like. The algorithm is based on a game modeling of the scenario according to game-theory formulation. One or more algorithms embodying the present invention is arranged to find the maximum of a channel capacity-based utility function. In order to avoid selfishness of each single AP node (i.e. a node taking all the available resources), the utility function may add the estimated capacity to a penalty factor, which is the cumulative effect of a non-linear weighted function of the noise rise estimated on the used Physical Resource Units (PRUs). The convergence speed of the algorithm may be improved in some embodiments of the invention through a sorting of the available PRUs according to an interference evaluation metric. The algorithm can be used in the time domain, in the frequency domain, or jointly in time and frequency domain. PRUs can hence potentially be time slots, frequency channels or time/frequency slots. The PRUS can also be defined by additionally or alternatively codes and/or space diversity.

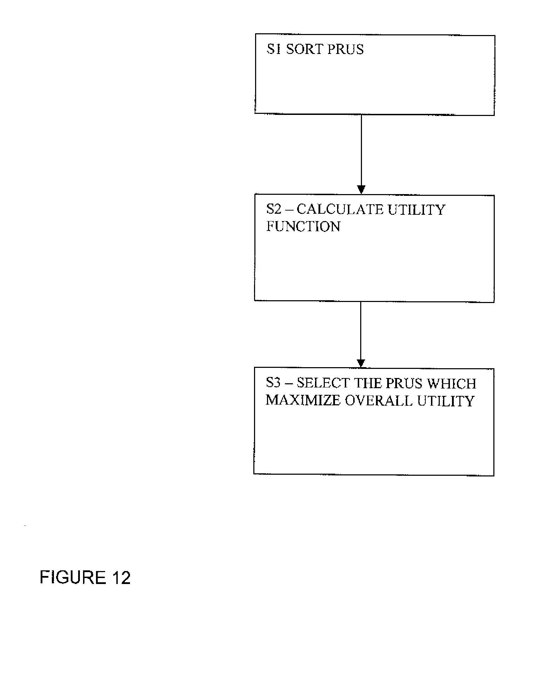

One embodiment of the invention is arranged to evaluate the utility function of a set of PRUs (Physical resource unit) and autonomously select the transmission PRUs based on this utility metric. A method embodying the present invention will be described with reference to Figure 12. The method may be implemented by a computer program and accordingly Figure 12 may illustrate an algorithm or steps implemented at least partially by a computer program running on a suitable processor, computer or the like. Embodiment of the invention which are in computer program form may be provided on any suitable data carrier or may be downloadable from a server or the like.

The PRUs may be in the time and/or frequency domain.

The utility function, an example of which is defined by equation (1) below, is a non-linear weighted function of capacity and interference-to-noise ratio (also known as noise rise). This interference-to-noise ratio is a measure of the energy which is "wasted" to win over the 'other-cell' interference and therefore it is energy which is not spent in the most efficient way.

One algorithm embodying the present invention uses the following sensing information, available per PRU:

Signal-to-interference-plus-noise ratio (SINR) Interference-to-noise ratio (INR)SINR =S/(I + N) where S is the received signal, I is the incoming interference and N is the noise at the receiver.

INR=I/N

This information can be sensed directly by the AP and/or sensed by the affiliated UEs (user equipment) and then reported to the AP through data packets or via any other suitable method.

The overall physical transmission resource is subdivided into $s_i^{MAX}$ orthogonal PRUs. The algorithm of Figure 12 is as follows. When an AP is on its turn to update the resource allocation, the following algorithm is applied to determine how the available PRUs are to be assigned:

In S1, sorting of the aggregated interference information vector provided by sensing I (Interference), is carried out from 1 to $s_i^{MAX}$ such that PRU 1 is the one experiencing less interference and PRU $S_i^{MAX}$ is the one experiencing the highest interference level. The advantage of this sorting process is that, for some embodiments, it reduces the complexity of the algorithm, as the PRU allocation decision loop can be stopped when the utility function value described in step S2 falls below zero. This step may be omitted in some embodiments of the invention. This may assist in reducing the convergence time of the algorithm to the desired optimal resource allocation state in order not to introduce unacceptable service delays.

In the next step S2, for each PRU k, its associated utility function is calculated according to equation (1):

$$U(k) = \begin{cases} C_k(SINR_k) & I_k < N_k \\ C_k(SINR_k) - f\left(\frac{k}{s_i^{MAX}}\right)C_k(INR_k) & otherwise \end{cases} \quad (1)$$

Where,

**U(k)** is the utility function provided by PRU k

**$C_k$** is the estimated channel capacity as a function of SINR (signal-to-interference-plus-noise ratio), which is system specific and may be obtained by, for example, measurements or simulations. This estimated channel capacity should take into account current transmission mode selection (modulation, coding, multi-antenna configuration, etc). Ck is a function which is related to the technology being used (WLAN; LTE, etc). One example of such function for an LTE system is $C_k = B.B_{eff} \log_2\left(1 + \frac{SINR}{SNR_{eff}}\right)$, where B is bandwidth, $B_{eff}$ is the bandwidth efficiency and $SNR_{eff}$ is the Signal to Noise Ratio efficiency and it may be found in the paper :

P. Mogensen et al. "LTE capacity compared to Shannon bound" (see below). For the tax function $C_k$(INR) is calculated

on place of SINR.

$$C_k = B.B_{eff} \log_2\left(1 + \frac{INR}{SNR_{eff}}\right)$$

$SINR_k$ is the signal-to-interference-plus-noise ratio in PRU k if the AP chooses to transmit in PRU k. This is derived from the sensed information.

$f(x)$ is a design parameter and it is generally a continuous function. The algorithm maybe such that f(x) is such that the first derivative is non-decreasing or conversely the second derivative is always non-negative, i.e., $f'(x) \geq 0$ in the interval [$0 \leq x \leq 1$]. The reasoning is the following: the more PRUs an AP selects the higher the penalty (or price) it should pay for additional PRUs. A simple yet effective example of f(x) choice is f(x)=2x. In some embodiments, x can be the logical number of the PRU. Alternatively x can be the number of selected PRUs. In other embodiments, x is the percentage of PRUs that the AP has already selected. Alternatively the function can be f(k).

$k$ is the logical number of a PRU, as provided by the sorting process described in step 1.

$S_i^{MAX}$ is the total number of PRUs in the overall physical transmission resource. $INR_K$ is the interference-to-noise ratio in PRU k if the AP chooses to transmit in PRU k. This is derived by the sensed information.

In Step S3, the amount of PRUs, $s_i$, are selected that maximize the proposed overall utility OU($s_i$) as defined in Equation (2) below. In other words. the method selects only the first $s_i$ PRUs which give positive utility. If not all the selected PRUs are needed in order to satisfy bit-rate requirements for all served communication devices, the algorithm may allocate only up to the first $s_i$ PRUs needed to satisfy the throughput requirements.

The overall utility function is calculated as:

$$OU(s_i) = \sum_{k=1}^{s_i} U(k) \qquad (2)$$

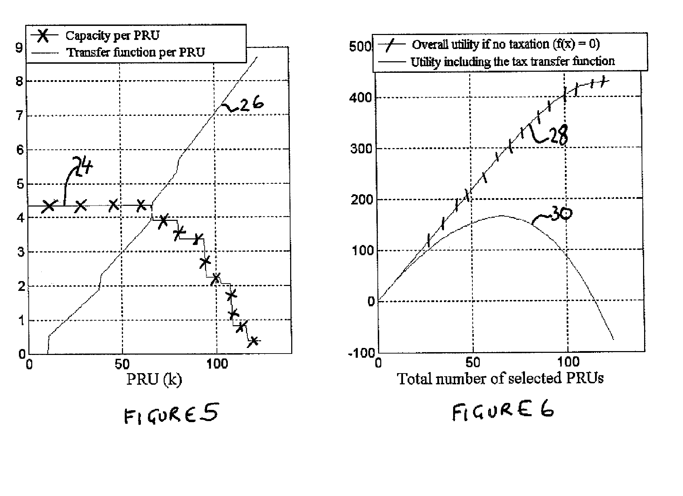

The relation between the overall utility OU($s_i$) and the achieved sum capacity is illustrated in Figure 6 which is described in more detail later.

The tax transfer function is given by

$$T(k) = f\left(\frac{k}{s_i^{MAX}}\right) C_k(INR_k) \qquad (3)$$

As described in shown in equation 1, the tax transfer function is subtracted from channel capacity $C_k$ in order to evaluate the total utility of the k-th PRU. In order to maximize the utility, the point where U(k) falls below zero is located.

If the algorithm is applied to several APs at the same time, there may be a small probability that the algorithm will ever converge. In order to enhance the convergence of the process, it may be assumed that APs avoid changing their PRUs allocation at the same time. This may be achieved in any suitable way. For example:

• At every frame, an access point has a small probability of updating its PRU allocation, reducing the possibility that 2 or more APs change their allocation at the same time.

• The APs coordinate the process, taking turns to update the allocation.

It should be appreciated that this is by way of example only. In alternative embodiments of this invention, different methods for avoiding APs changing their PRU allocations at the same time may be provided. Alternatively, it can be assumed that the probability is small with no action being taken.

Some embodiments of the inventions may provide one or more of the following advantages:

Good performance in terms of aggregate capacity, outage capacity and resource efficiency if an appropriate tax function f(x) is chosen.

In some embodiments of the invention there may be no need for direct communication among the APs. All information is gathered locally in each AP and all decisions may be taken autonomously (distributed algorithm). Alternatively, one embodiment may not be a distributed form, but may instead exchange information among the APs (partially distributed), or use strong signaling and synchronization among the APs (centralized).

The utility of each PRU may be calculated separately, and therefore the complexity of the algorithm may be linear based on the maximum number of PRUs that can be allocated. Since the decision may be taken autonomously but in a coordinated way and without communication among APs, the complexity of the algorithm does not depend on the number of neighbour APs (the interference may be taken into account in the algorithm regardless of whether it comes from one or many sources). Therefore, the complexity of some algorithms embodying the invention may be quite low as compared to algorithms that need to exchange information between APs or algorithms that need to test all allocation possibilities.

Some embodiments of the invention may be able to provide a relatively fast convergence time.

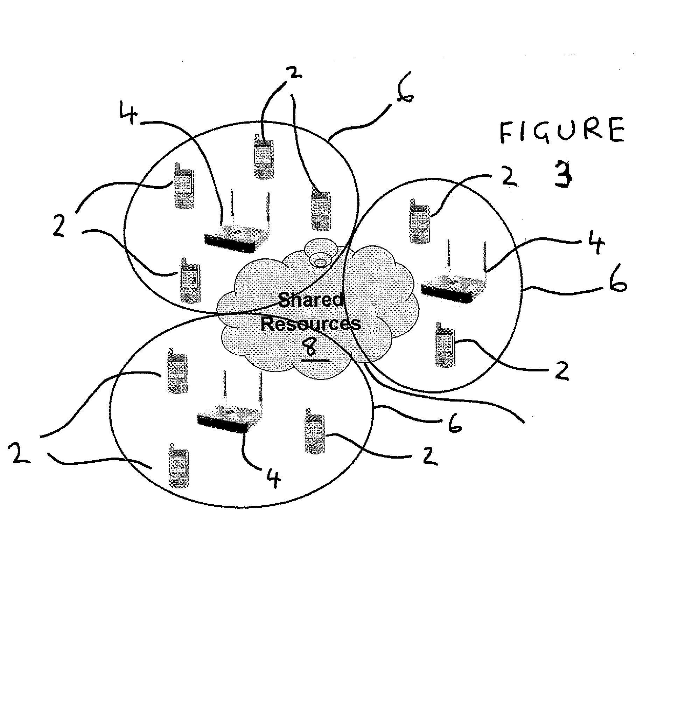

Reference is made to Figure 3 which illustrates a situation where three cells 6 are shown. Each cell is provided with an access point 4. The access point may take any suitable form and can, for example be a wireless router, a base station or any other access point with which a communication device is able to communicate with wirelessly. Associated with each cell and wireless router are communication devices 2 which communicate wirelessly with the access point 4. The resources which the various devices need to share are schematically referenced 8. The resources which need to be shared can be between access points in adjacent areas and/or access points sharing at least partially a common area. In this example, the shared resource represents a physical radio resource and this shared resource is divided up into time slots. Furthermore, the radio resource in this example is also divided by frequency. It should be appreciated that the physical resource can be shared in any other suitable manner.

Embodiments of the present invention have been described in the context of the WLAN arrangement. However, it should be appreciated that embodiments of the present invention can be used with any other type of network be it a so-called planned network such as GSM, WCDMA or LTE or a WLAN network such as WiFi or Bluetooth. Furthermore, embodiments of the present invention can be used by more than one network using the same or different standards. This can be used as a way of sharing resources between different types of networks as well as within a particular network.

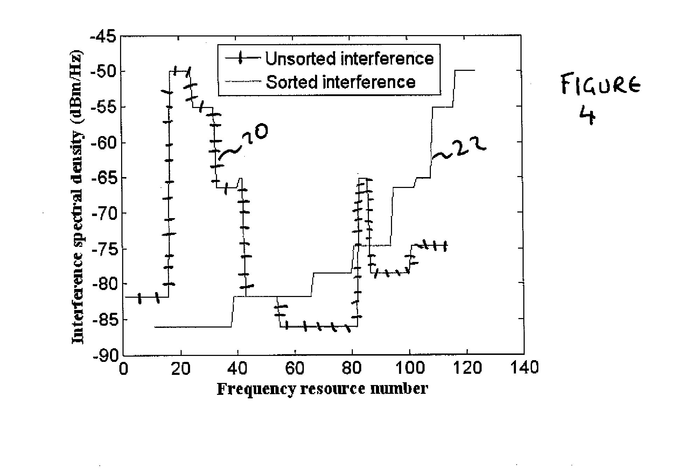

Reference is made to Figure 4 which shows how the PRU sorting process can improve embodiments of the present invention. Figure 4 represents a simulation showing interference spectral density plotted against frequency resource number. Two lines are shown. The first line 20 represents the unsorted interference whereas the second line 22 represents the sorted interference. When the interference is not sorted, the evaluation of equation (2) needs to be done for all possible allocations of PRUs. When it is sorted, the evaluation needs only to evaluate a small subset of the possible allocations. Therefore, sorting the interference may allow the method to be run faster when implemented in a computer or similar.

Reference is made to Figure 5 which shows a simulation which plots the spectral efficiency and transfer function of PRU against the PRU number. The first curve 24 represents the capacity per PRU and the second curve 26 represents the transfer function per PRU. Spectral efficiency is Ck divided by the bandwidth of a PRU. The transfer function is given by equation (3)

Reference is made to Figure 6 which shows the sum capacity and utility function plotted against the total number of selected PRUs. This graph shows two curves. Curve 30 is a plot of the overall utility, equation (2), for this case. Curve 28 shows overall utility if f shown in equation (3) is zero.

The maximum of the overall utility function illustrated by curve 30 coincides with the point where curve 24 crosses curve 26.

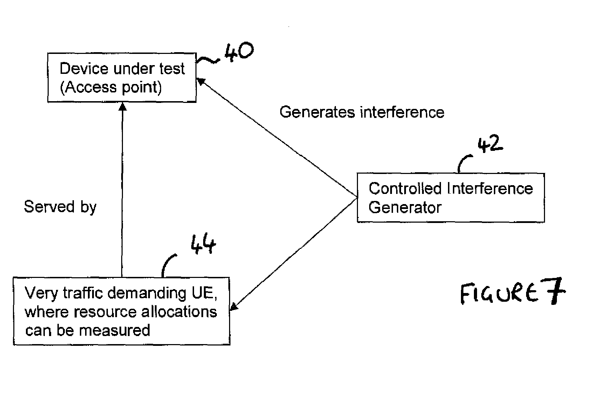

Reference is made to Figure 7 which schematically shows a proof of usage test. It also represents a schematic view of what would happen in practice. A device under test corresponds to an access point 40. A controlled interference generator 42 is provided which generates interference to the access point 40. In an actual scenario, 42 would be represented by other access points and communication devices in overlapping or adjacent cells. Also shown is a communication device 44 which is considered to a very traffic demanding user equipment where resource allocations can be measured. This UE is served by access point 40, as will be the case in use. The user equipment 44 is attached to the access point 40 and demands high traffic such as a large bit torrent.

The interference generator 42 is able to control the level of received interference on each channel for both the user equipment and the access point 40. In the test procedure, a very good signal reception condition is initially used. This is represented by the user equipment being very close to the access point. The interference level is set such that $C_k$ ($INR_K$) as defined in equations 1 and 3 above is equal to the maximum capacity of the system. In other words a high interference level is generated on each channel with a fixed power spectral density. The signal reception conditions are varied, for example by moving the user equipment further away from the access point. For each signal condition, the number of allocated channels at the UE is measured. If the measured value is s*, for each value s* the following invariant can be verified in embodiments of the invention. If the interference is muted on s' channels, the output of the allocated channels is:

$$s^* \ \text{if} \ s' <= s^*$$

$$s' \ \text{if} \ s' > s^*$$

This was verified during simulations and it is considered that some embodiments of the present invention will have similar behaviour.

Embodiments of the invention may use game theory. In this regard reference is made to Fudenberg, D.; Tirole, J., "Game Theory", MIT Press, 1991 Chapter 7.

Game Theory is a branch of applied mathematics which attempts to mathematically capture behaviour in strategic situations in which an individual success for making choices depends on the choices of others.

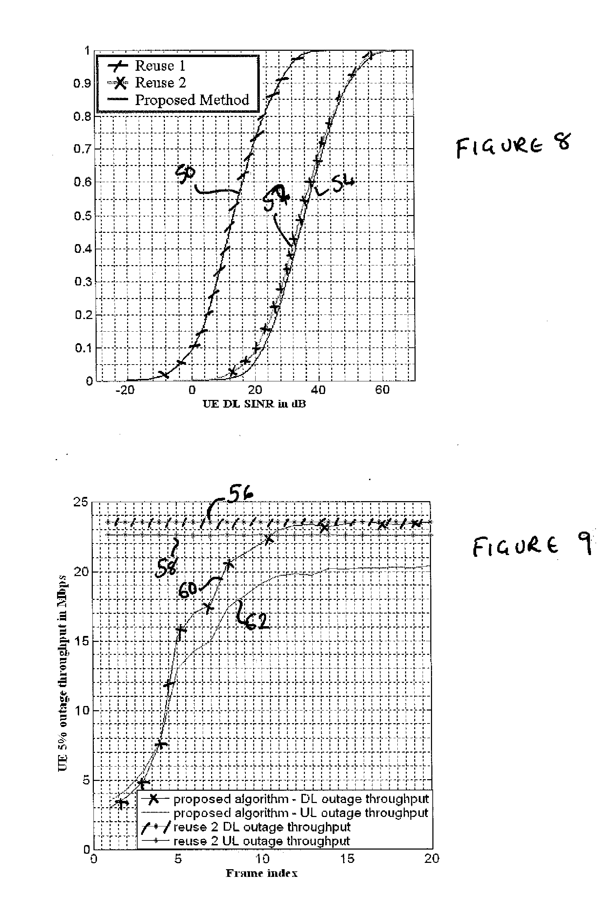

Reference is now made to Figures 8 to 10 which show some simulation results for embodiments of the present invention. In these scenarios, the simulation results were obtained in the frequency domain. The PRUs are OFDMA (Orthogonal Frequency Divisional Multiple Access) PRB (Physical Resource Blocks) in a network with four access points. Over 500 randomly generated network positions were assumed. Both the access points and the mobile station positions were assumed to be random. An LTE-advance system with 100 Hz is assumed. The function $C_k$ (see above) is a modified Shannon approximation which is described in the following reference:

Mogensen, P.; Wei Na; Kovacs, I.Z.; Frederiksen, F.; Pokhariyal, A.; Pedersen, K.I.; Kolding, T.; Hugl, K.; Kuusela, M., "LTE Capacity Compared to the Shannon Bound," Vehicular Technology Conference, 2007. VTC2007-Spring. IEEE 65th , vol., no., pp.1234-1238, 22-25 April 2007.

The function f(x) was chosen to be f(x)=2x. The simulations compare results of an algorithm embodying the present invention with reuse 1 and reuse 2 frequency schemes. Referring first to Figure 8, three curves 50, 52 and 54 are shown. Curve 50 represents a reuse 1 frequency scheme. The second curve 52 represents a reuse 2 frequency scheme and the third curve 54 represents a curve using a method embodying the present invention. Figure 8 represents the cumulative distribution function PDF of downlink signal to noise ratio for three spectrum use approaches: fixed frequency reuse 1, fixed frequency reuse 2 and dynamic spectrum access using a method embodying the invention. As can be seen from Figure 8, embodiments of the present invention are able to improve the signal to interference noise ratio even over reuse scheme 2. As a first simulation set, all PRBs are used by all access points with a reuse factor of 1. Over time the algorithm embodying the present invention may converge to a more efficient solution approximating the performance of reuse 2 which is considered to be an optimal integer frequency reuse. This sort of result could be obtained by network planning. Accordingly, embodiments of the present invention can be regarded as approximating reuse 2 performance and represents a good measure of the effectiveness of an algorithm embodying the present invention.

Reference is now made to Figure 9 which shows the UE outage (at 5%) throughput of an algorithm embodying the present invention over time. The time index is with reference to super frames. In Figure 9, four curves are shown. The first curve 56 represents the curve for a reuse 2 frequency scheme - with downlink outage throughput. Curve 58 represents a reuse 2 frequency scheme for uplink outage throughput. Curve 60 represents an algorithm embodying the invention for a downlink outage throughput. The fourth curve 62 represents an embodiment of the present invention with uplink outage throughput. It can be seen that reuse 2 performance can be considered to be approximated when convergence is reached.

Thus, an algorithm embodying the invention can provide substantial outage capacity gain over reuse 1 leading to a performance comparable to reuse 2.

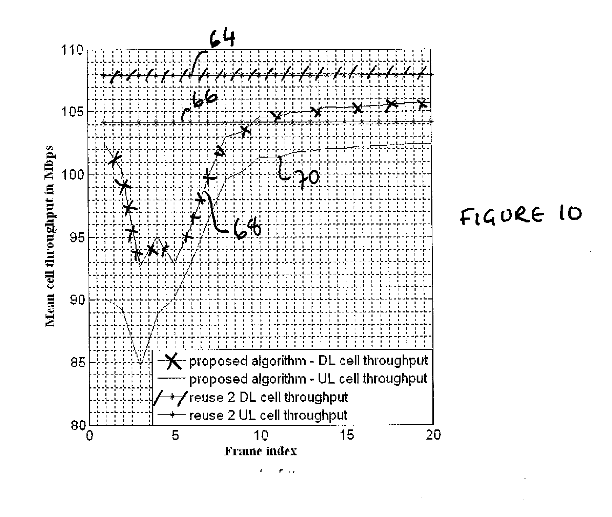

Reference is made to Figure 10 which shows the evolution of cell throughput of an algorithm embodying the present invention over time which again is represented by super frames. Again, reuse 2 performance can be considered to be approximated when convergence is reached. In the arrangement shown in Figure 10, there are four curves. Curve 64 represents the reuse 2 for downlink cell throughput. Curve 66 represents reuse 2 for uplink cell throughput. Curve 68 represents an algorithm embodying the present invention for downlink cell throughput whilst curve 70 represents an algorithm embodying the present invention for uplink cell throughput. It should be appreciated that in Figure 10, shows mean cell throughput in Mbps against frame index. This Figure shows that capacity also approximates the values of reuse 2. On the first round of spectral adaption, for example for frames 1 to 4 the sum capacity is reduced. This can be explained by game theory. Only a combined effort of all access points can lead from an inefficient stable state of reuse 1 to an efficient stable state closed to reuse 2. Unilateral efforts may reduce the total throughput but the combined effect will increase it as seen from frame 6 onwards.

These results were generated considering perfectly elastic traffic - full buffer simulations. The dynamic spectrum access can potentially deal with asymmetric bursty traffic in a much more efficient way than fixed spectrum reuses.

It should be appreciated that this is just one simulation of how embodiments of the present invention might work in practice.

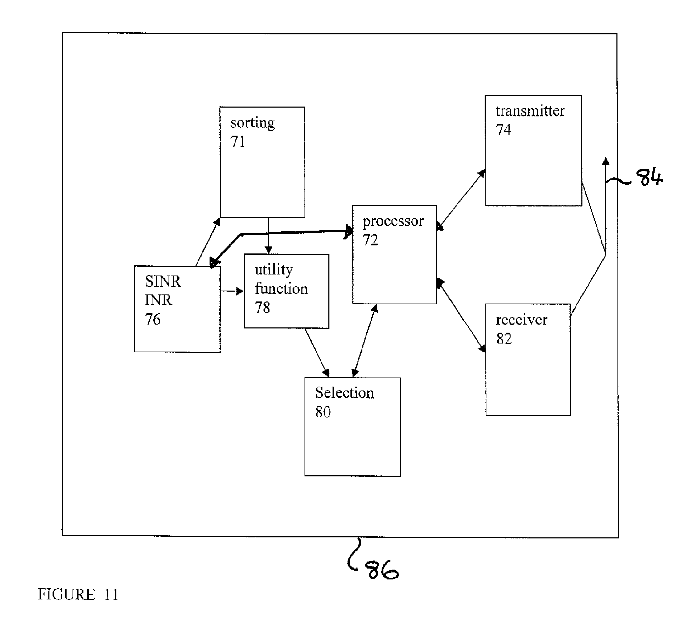

Reference is made to Figure 11 which schematically shows an access point embodying the present invention.

The access point 86 comprises an antenna 84. The antenna 84 is coupled to transmit circuitry 74 and receiver circuitry 82. The transmit circuitry 74 passes data to be transmitted to the antenna. Likewise, the receiver circuitry 82 is arranged to receive data from a communication device via the antenna. The transmit circuitry 74 and the receiver circuitry 82 are connected to a processor 72. The access point 86 has an SINR/INR block 76. This block is arranged to calculate the SINR/INR 76 from information which is measured or determined from the received signals and/or on the basis of data received from communication devices. Accordingly, the SINR/INR block 76 may be a memory storing device or a device which is arranged to determine the SINR/INR values from the received information. This block 76 may be connected to the processor 72. A sorting block 71 is arranged to sort the aggregated information vector based on the information from the SINR/INR block 76.

A utility function calculation block 78 is provided which receives information from the sorting block 71 and the SINR/INR 76 block. The utility function block 78 is arranged to calculate the utility function.

Selection block 80 is arranged to select the amount of PRUs to be used. The selection block may be connected to the processor block 72 which uses the selection in order to control the used PRUs.

It should be appreciated that the various blocks shown in Figure 11 may be comprised in one or more integrated circuits. One or more of the blocks shown in Figure 11 may be implemented by software running on an associated processor.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A method comprising:

   performing a first function which is dependent on an estimated resource capacity and a penalty which is dependent on at least one of a number of physical resource units selected and interference; and
   selecting one or more physical resource units in dependence on said first function.

2. A method as claimed in claim 1, wherein said first function comprises a utility function,

3. A method as claimed in any preceding claim, wherein said estimated resource capacity comprises a channel capacity.

4. A method as claimed in any preceding claim, wherein said estimated resource capacity comprises a function of a signal to interference dependent parameter ratio.

5. A method as claimed in any preceding claim wherein said penalty comprises a factor which depends on an interference dependent parameter.

6. A method as claimed in claim 4 or 5, wherein said interference dependent parameter comprises one of interference-plus-noise and interference.

7. A method as claimed in claim 4, 5 or 6 wherein said interference dependent parameter is per physical resource unit.

8. A method as claimed in any of claim 4 to 7, comprising obtaining said dependent parameter.

9. A method as claimed in any of preceding claim, wherein said penalty comprises a factor which increases as a number of physical resource units which are selected increases.

10. A method as claimed in any preceding claim, comprising selecting one or more physical resource units from one or more physical resource units based on for which said estimated resource capacity outweighs said penalty

11. A method as claimed in any preceding claim, comprising sorting of physical resource units in dependence on interference.

12. A computer program comprising program code means adapted to perform any of the steps of claims 1 to 11 when the program is run.

13. Apparatus comprising:

   means for performing a first function which is dependent on an estimated resource capacity and a penalty which is dependent on at least one of a number of physical resource units selected and interference; and
   means for selecting one or more physical resource units in dependence on said first function.

14. Apparatus as claimed in claim 13, wherein said estimated resource capacity comprises a function of a signal to interference dependent parameter ratio.

15. Apparatus as claimed in claim 13 or 14, wherein said penalty comprises a factor which depends on an interference dependent parameter.

Fig. 1

Fig 2

FIGURE 3

FIGURE 4

FIGURE 5

FIGURE 6

Device under test
(Access point)
40

Generates interference

42

Controlled Interference
Generator

Served by

44

Very traffic demanding UE,
where resource allocations
can be measured

FIGURE 7

FIGURE 8

FIGURE 9

FIGURE 10

FIGURE 11

S1 SORT PRUS

S2 – CALCULATE UTILITY FUNCTION

S3 – SELECT THE PRUS WHICH MAXIMIZE OVERALL UTILITY

FIGURE 12

**Europäisches Patentamt**
**European Patent Office**
**Office européen des brevets**

# EUROPEAN SEARCH REPORT

Application Number

EP 09 16 0546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRISHNASWAMY D ED - INSTITUTE OF ELECTRICAL AND ELECTRONICS ENGINEERS: "Game theoretic formulations for network-assisted resource management in wireless networks" VTC 2002-FALL. 2002 IEEE 56TH. VEHICULAR TECHNOLOGY CONFERENCE PROCEEDINGS. VANCOUVER, CANADA, SEPT. 24 - 28, 2002; [IEEE VEHICULAR TECHNOLGY CONFERENCE], NEW YORK, NY : IEEE, US, vol. 3, 24 September 2002 (2002-09-24), pages 1312-1316, XP010608641 ISBN: 978-0-7803-7467-6 * page 1313, left-hand column, line 1 - line 5 * * page 1313, left-hand column, line 18 - line 19 * * page 1313, left-hand column, line 25 - line 29 * * page 1313, left-hand column, line 47 - line 52 * * page 1313, left-hand column, line 55 - right-hand column, line 9 * * page 1313, right-hand column, line 3 - line 15 * * page 1313, right-hand column, line 21 - line 24 * * page 1313, right-hand column, line 30 - line 33 * * page 1313, right-hand column, line 36 - line 38 * | 1-6, 8-10, 12-15 | INV. H04W72/04 |
| Y | * page 1312, paragraph II * * page 1312, right-hand column, line 33 - page 1313, left-hand column, line 12 * | 7,11 | |

TECHNICAL FIELDS SEARCHED (IPC)

H04W

-/--

The present search report has been drawn up for all claims

| Place of search | Date of completion of the search | Examiner |
|---|---|---|
| The Hague | 19 October 2009 | López García, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

Application Number

EP 09 16 0546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUMAR S ET AL: "Spectrum Load Balancing for Flexible Spectrum Usage in Local Area Deployment Scenario" NEW FRONTIERS IN DYNAMIC SPECTRUM ACCESS NETWORKS, 2008. DYSPAN 2008. 3RD IEEE SYMPOSIUM ON, IEEE, PISCATAWAY, NJ, USA, 14 October 2008 (2008-10-14), pages 1-5, XP031353332 ISBN: 978-1-4244-2016-2 * page 2, left-hand column, line 20 - line 23 * * page 2, left-hand column, line 31 - line 37 * * page 2, right-hand column, line 5 - line 15; figure 1 * | 1,12,13 | |
| Y | * page 2, right-hand column, line 5 - line 15 * | 7,11 | |
| A | BRUCE FETTE: "Cognitive Radio Technology" REFEREX, 2006, XP040426135 Suite 400, Burlington, MA 01803, USA * page 163 - page 184 * * page 501 - page 579 * | 1-15 | |

TECHNICAL FIELDS
SEARCHED      (IPC)

The present search report has been drawn up for all claims

| Place of search | Date of completion of the search | Examiner |
|---|---|---|
| The Hague | 19 October 2009 | López García, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Beibei Wang ; Yongle Wu ; Zhu Ji ; Liu, K.J. ; Clancy, T.** Game theoretical mechanism design methods. *Signal Processing Magazine, IEEE,* November 2008, vol. 25 (6), 74-84
- **Leshem, A. ; Zehavi, E.** Cooperative Game Theory and the Gaussian Interference Channel. *Selected Areas in Communications, IEEE Journal,* September 2008, vol. 26 (7), 1078-1088
- **Nie ; C. Comaniciu.** Adaptive Channel Allocation Spectrum Etiquette for Cognitive Radio Networks. *IEEE Symposium on New Frontiers in Dynamic Spectrum Access Networks (DySPAN),* November 2005
- **P. Mogensen et al.** *LTE capacity compared to Shannon bound*
- **Fudenberg, D. ; Tirole, J.** Game Theory. MIT Press, 1991
- **Mogensen, P. ; Wei Na ; Kovacs, I.Z. ; Frederiksen, F. ; Pokhariyal, A. ; Pedersen, K.I. ; Kolding, T. ; Hugl, K. ; Kuusela, M.** LTE Capacity Compared to the Shannon Bound. *Vehicular Technology Conference, 2007. VTC2007-Spring. IEEE 65th,* 22 April 2007, 1234-1238